# EUROPÄISCHE PATENTSCHRIFT

(11) **EP 2 216 620 B1**
(45) Veröffentlichungstag und Bekanntmachung des Hinweises auf die Patenterteilung: **09.10.2013**
(21) Anmeldenummer: 09178803.4
(22) Anmeldetag: 11.12.2009
(51) Int. Cl.: G01B 3/06

(54) **Gliedermaßstab**
Folding rule
Mètre pliant

(30) Priorität: 04.02.2009 DE 102009007556
(43) Veröffentlichungstag der Anmeldung: 11.08.2010
(73) Patentinhaber: Adga Adolf Gampper GmbH, 74535 Mainhardt (DE)
(72) Erfinder: Gampper, Gerald, 74535, Mainhardt (DE)
(74) Vertreter: Gauss, Nikolai

(56) Entgegenhaltungen:
- EP-A2- 0 174 508
- WO-A1-2006/086933
- DE-C- 14 289
- US-A- 1 983 651
- US-A- 2 655 730

## Beschreibung

Die Erfindung betrifft einen Gliedermaßstab mit langgestreckten flachen Gliedern, die paarweise gelenkig verbunden sind, bei dem eine Gelenkverbindung mit einer Drehachse eine erste Gelenkplatte aufweist, die an einem ersten Glied festgelegt ist und die eine zweite Gelenkplatte umfasst, welche an einem zweiten Glied befestigt ist, wobei an der ersten Gelenkplatte eine Federzunge mit einem Rastabschnitt ausgebildet ist, der mit einem ersten komplementären Rastabschnitt und mit einem zweiten komplementären Rastabschnitt an der zweiten Gelenkplatte zusammenwirkt, um die Gelenkverbindung in einer ersten Einstellung und in einer von der ersten Einstellung verschiedenen zweiten Einstellung mittels Federkraft zu rasten, wenn das erste Glied relativ zu dem zweiten Glied um die Drehachse geschwenkt wird.

Ein Gliedermaßstab der eingangs genannten Art ist aus der DE 2 037 063 A bekannt. Dort ist ein Gliedermaßstab beschrieben, dessen Glieder in einer eingefalteten Stellung und in einer ausgefalteten Stellung rasten. Hierzu sind jeweils zwei Glieder des Gliedermaßstabs durch eine Gelenkverbindung verbunden, die eine erste und eine zweite Gelenkplatte sowie einen Nietbolzen aufweist. Die Gelenkplatten sind an unterschiedlichen Gliedern des Maßstabs festgelegt. Sie werden von dem Nietbolzen durchsetzt. Die eine Gelenkplatte hat zwei Federzungen mit einem Rastabschnitt in Form einer Erhebung. In der anderen Gelenkplatte gibt es zwei Vertiefungen, die als komplementäre Rastabschnitte wirken. Die beiden Federzungen mit der Erhebung an der einen Gelenkplatte liegen zu beiden Seiten des Nietbolzens auf der Längsachse des Maßstabglieds, an dem die Gelenkplatte festgelegt ist. Die Vertiefungen der anderen Gelenkplatte befinden sich entsprechend auf der Längsachse des anderen Maßstabglieds links und rechts von dem Nietbolzen. Die Gelenkverbindung rastet, wenn eine Erhebung an den Federzungen der einen Gelenkplatte mit der entsprechenden Vertiefung an der anderen Gelenkplatte in Eingriff gerät. So wird eine exakt fluchtende Lage der Maßstabglieder gewährleistet, wenn die Maßstabglieder ausgefaltet sind.

Ein ähnlicher Gliedermaßstab ist aus der WO 2006/086933 A1 bekannt.

Das gewährleistet eine hohe Messgenauigkeit beim Messen mit dem Gliedermaßstab.

Für das Vermessen von kleinen oder schwer zugänglichen Messobjekten wird ein Gliedermaßstab häufig nur teilweise ausgefaltet. Hier ist es günstig, wenn ein oder mehrere Maßstabglieder, die exakt fluchten, mit einem oder mehreren anderen Gliedern des Gliedermaßstabs in einer definierten Position an das Messobjekt angelegt werden können.

Aufgabe der Erfindung ist es, einen Gliedermaßstab bereitzustellen, bei dem eine stabile Zwischenposition einer Gelenkverbindung für zwei Maßstabsglieder in einer abgewinkelten Stellung zwischen einer eingefalteten und einer ausgefalteten Stellung der Glieder des Maßstabs eingestellt werden kann.

Diese Aufgabe wird durch einen Gliedermaßstab mit den Merkmalen von Anspruch 1 gelöst.

Eine Besonderheit der Erfindung liegt deshalb darin, dass der erste und der zweite komplementäre Rastabschnitt an der zweiten Gelenkplatte auf einer Kreisbahn um die Drehachse der Gelenkverbindung liegt. Im Bezug auf die Drehachse der Gelenkverbindung stehen dabei der erste und der zweite komplementäre Rastabschnitt zueinander in eine stumpfen Winkel oder einem spitzen Winkel, vorzugsweise in einem Winkel ϕ=±90°, d.h. einem rechten Winkel.

Eine bevorzugte Ausgestaltung der Erfindung sieht vor, dass der zweite komplementäre Rastabschnitt eine seitliche Aussparung in der zweiten Gelenkplatte ist. Vorzugsweise ist diese seitliche Aussparung rechteckförmig.

Alternativ hierzu kann der zweite komplementäre Rastabschnitt auch als eine Vertiefung am Umfangsbereich der zweiten Gelenkplatte ausgebildet sein. Diese Vertiefung hat vorzugsweise die Form einer Wanne mit einer konkav gekrümmten Bodenfläche. Die Bodenfläche der wannenartigen Vertiefung kann aber auch eben sein. Es ist auch möglich, die Vertiefung mit einer Durchbrechung auszuführen. Eine solche Vertiefung kann beispielsweise durch Stanzen einer ebenen Gelenkplatte mit einem geeigneten Stanzwerkzeug erzeugt werden. Es ist auch möglich, den zweiten komplementären Rastabschnitt als eine runde oder als eine eckige Einschlifffase am Umfangsbereich der zweiten Gelenkplatte auszuführen.

Der Rastabschnitt an der Federzunge ist vorzugsweise eine Erhebung. Es ist günstig, diese Erhebung als Pyramidenstumpf auszubilden, der eine zur Drehachse der Gelenkverbindung weisende langgestreckte schräge Flanke hat.

Auch der erste komplementäre Rastabschnitt in der zweiten Gelenkplatte ist vorzugsweise als Vertiefung ausgebildet. Hier ist es ebenfalls günstig, wenn Vertiefung die Form eines Pyramidenstumpfes mit einer zur Drehachse der Gelenkverbindung weisenden langgestreckten schrägen Flanke hat. Eine bevorzugte Ausführungsform der Erfindung sieht vor, dass der zweite komplementäre Rastabschnitt zur Deckfläche des Pyramidenstumpfes komplementär gestaltet ist.

Indem in dem ersten Glied eine wannenartige Ausnehmung vorgesehen ist, in welche die Federzunge mit Rastabschnitt bei einem Verstellen der Gelenkverbindung eintauchen kann, lässt sich erreichen, dass die Glieder des Gliedermaßstabs eng aneinanderliegen, wenn der Gliedermaßstab zusammengefaltet ist. Eine zusätzliche wannenartige Ausnehmung in dem zweiten Glied ermöglicht das Versenken von Rastabschnitten in der zweiten Gelenkplatte. Vorzugsweise hat das erste Glied des Gliedermaßstabs außerdem eine Versenkungsvertiefung für die erste Gelenkplatte. Von Vorteil ist es, wenn in dem zweiten Glied entsprechend eine Versonkungsvertiefun für die zweite Gelenkplatte ausgebildet ist. Hierdurch wird erreicht, dass die Glieder des Maßstabs im zusammengefalteten Zustand so aneinander liegen, dass die beiden Gelenkplatten einer Gelenkverbindung verborgen sind. Damit bietet der zusammengefaltete Gliedermaßstab zwei homogene rechteckige Seitenflächen, die sich hervorragend für Werbeaufdrucke eignen.

Ein Stegabschnitt an den Gliedern des Gliedermaßstabs im Bereich einer Durchgangsbohrung für einen Nietbolzen der Gelenkverbindung bewirkt eine hohe mechanische Belastbarkeit des Gliedermaßstabs im Bereich der Gelenkverbindung. Das gewährleistet, dass der Maßstab trotz der wannenartigen Vertiefungen im Bereich der Gelenkverbindung stabil ist und er dort nicht leicht brechen kann.

Im Folgenden wird die Erfindung anhand der in der Zeichnung in schematischer Weise dargestellten Ausführungsbeispiele näher erläutert. Es zeigen
- Fig. 1: eine Seitenansicht eines Gliedermaßstabs mit einem ausgeschwenkten Maßstabglied;
- Fig. 2a: und b zwei gelenkig verbundene Glieder des Gliedermaßstabs in einer ausgefalteten und in einer abgewinkelten Raststellung;
- Fig. 3: eine Explosionsdarstellung der Gelenkverbindung von zwei Gliedern des Gliedermaßstabs;
- Fig. 4a,: b und c Ansichten einer ersten Gelenkplatte der Gelenkverbindung;
- Fig. 5a,: b und c Ansichten einer zweiten Gelenkplatte der Gelenkverbindung;
- Fig. 6: einen Schnitt der Gelenkverbindung in ausgefalteter Raststellung;
- Fig. 7: einen Schnitt der Gelenkverbindung entlang der Linie VII-VII aus Fig. 6;
- Fig. 8: eine Draufsicht der Gelenkverbindung in abgewinkelter Raststellung;
- Fig. 9: einen Schnitt der Gelenkverbindung entlang der Linie IX-IX aus Fig. 8.
- Fig. 10: eine erste alternative Ausführungsform der zweiten Gelenkplatte in der Gelenkverbindung;
- Fig. 11: einen vergrößerten Schnitt der zweiten Gelenkplatte entlang der Linie XI-XI aus Fig. 10; und
- Fig. 12a: bis e Schnitte von Rastabschnitten weiterer alternativer Ausführungsformen der zweiten Gelenkplatte.

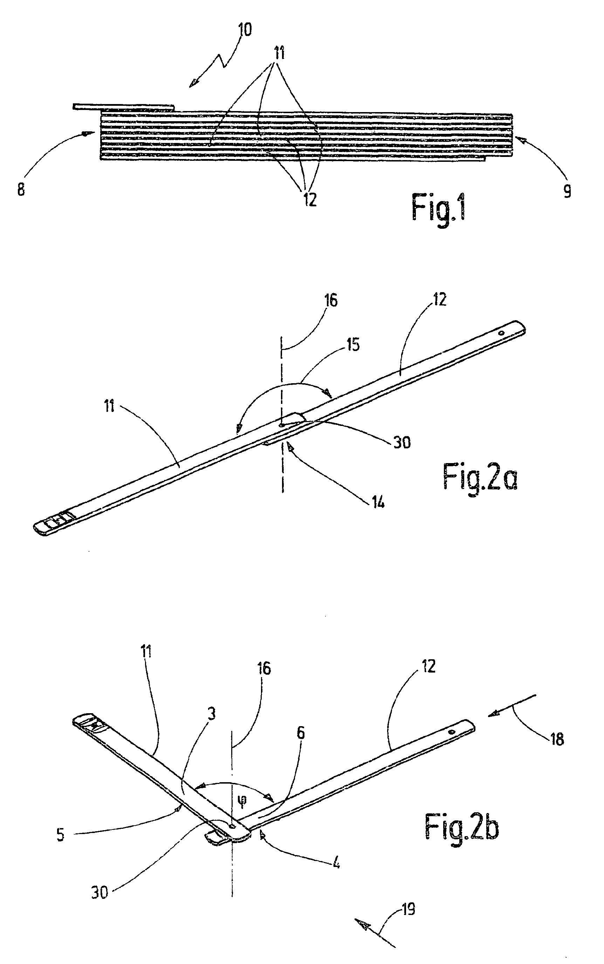

Der Gliedermaßstab 10 in Fig. 1 hat langgestreckte flache Glieder 11,12, die aus Holz bestehen. Die Glieder 11,12 sind in der Nähe ihrer Gliedenden im Abstand der stirnseitigen Enden 8, 9 paarweise gelenkig verbunden. Die eingefalteten Glieder 11,12 des Gliedermaßstabs 10 liegen quasi ohne Luftspalt eng aneinander. Die eingefalteten Glieder des Gliedermaßstabs 10 bilden damit zwei Flächen, die homogen erscheinen und für großflächige Werbeaufdrucke geeignet sind.

Die Fig. 2a zeigt ein Glied 11 und ein Glied 12 des Gliedermaßstabs 10. Die Glieder 11,12 sind durch eine Gelenkverbindung 14 verbunden. Die Gelenkverbindung 14 ermöglicht ein Verschwenken des Glieds 11 entsprechend dem Doppelpfeil 15 relativ zum dem Glied 12 um die Drehachse 16. Die Glieder 11,12 sind hier in einer ausgefalteten Schwenkstellung, in der die Gelenkverbindung 14 rastet.

Die Gelenkverbindung 14 hat einen Nietbolzen 30. Der Nietbolzen 30 greift durch miteinander fluchtende Bohrungen in den Gliedern 11,12 hindurch. Er stützt sich mit seinen Köpfen in Vertiefungen an den Breitseitenflächen 3,4 der Glieder 11,12 ab. An ihren einander zugewandten Breitseitenflächen 5,6 werden die Glieder 11,12 durch den Nietbolzen 30 zusammengedrückt.

In Fig. 2b sind die Glieder 11,12 in einer abgewinkelten Schwenkstellung gezeigt: Hier steht das Glied 11 unter einem rechten Winkel ϕ = 90° zu dem Glied 12. Auch in dieser Schwenkposition rastet die Gelenkverbindung 14. Weitere Rastungen der Gelenkverbindung 14 gibt es bei Übereinanderliegen der Glieder 11,12 in der mit dem Pfeil 18 angedeuteten Schwenkposition ϕ = 0 und in der Schwenkposition entsprechen Pfeil 19 bei ϕ = -90°.

Die Gelenkverbindung 14 hat eine erste Gelenkplatte 21 und eine zweite Gelenkplatte 24. Die erste Gelenkplatte 21 besteht vorzugsweise aus gehärtetem Federstahl. An der Gelenkplatte 21 sind als Krallen wirkende Zacken 22 ausgebildet. Mittels dieser Zacken 22 ist die Gelenkplatte 21 im Holz des Gliedes 11 verankert.

Auch die zweite Gelenkplatte 24 ist vorzugsweise in gehärtetem Federstahl ausgeführt. Sie hat Zacken 25, mit denen sie im Holz von Glied 12 befestigt sind.

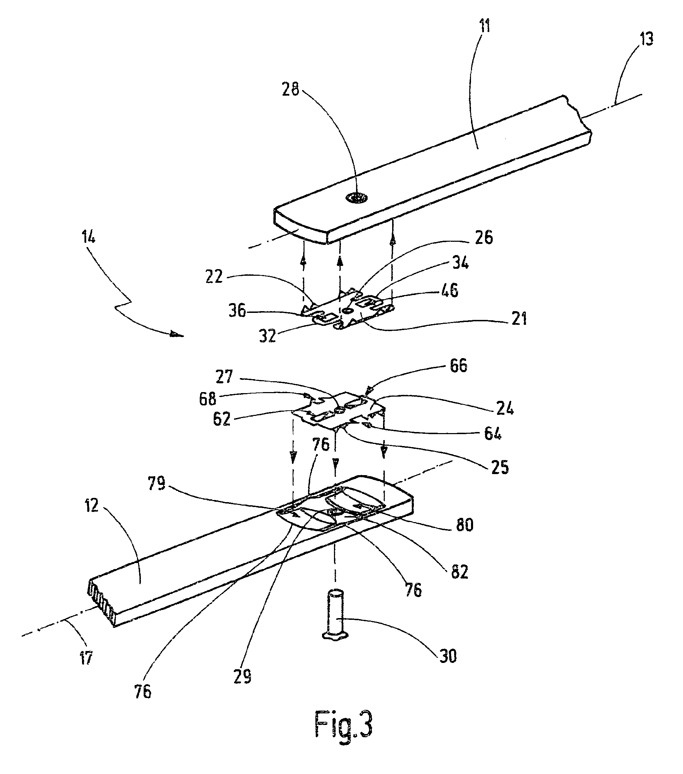

Wie die Fig. 3 zeigt, haben die Gelenkplatten 21,24 jeweils eine mittige Bohrung 26,27. Diese Bohrungen 26,27 fluchten mit den entsprechenden Bohrungen 28,29 in den Gliedern 11,12 für den Nietbolzen 30.

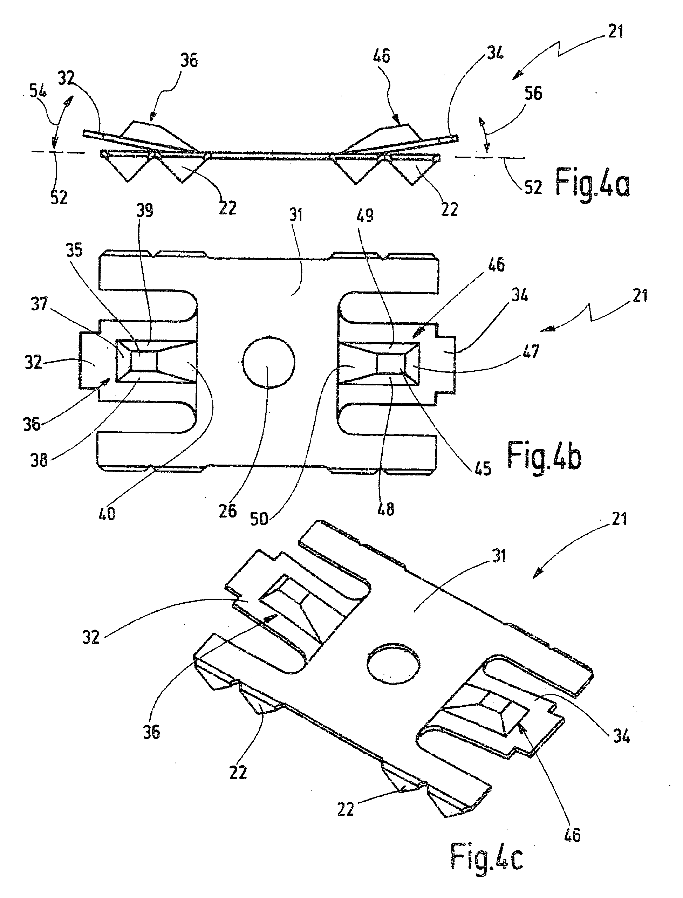

Die erste Gelenkplatte 21 ist in Fig. 4a in Seitenansicht, in Fig. 4b in Draufsicht und in Fig. 4c in perspektivischer Ansicht gezeigt. Die erste Gelenkplatte 21 hat eine Mittenpartie 31, an die zwei Federzungen 32,34 anschließen. An den beiden Federzungen 32,34 gibt es jeweils einen Rastabschnitt 36,46. Die Rastabschnitte 36,46 sind als Erhebung in der Form eines Pyramidenstumpfs gestaltet. Der Pyramidenstumpf 36 und der Pyramidenstumpf 46 haben eine Deckfläche 35 und eine Deckfläche 45. Von den Dachflächen 35,45 verläuft eine langgestreckte Auflaufschräge 40,50 hinab zur Mittenpartie 31 der Gelenkplatte 21. Mittels der Zacken 22 ist die Gelenkplatte 21 so im Holz des Gliedes 11 verankert, dass die beiden Federzungen 32,34 zu beiden Seiten das in Fig. 3 gezeigten Nietbolzens 30 auf der Längsachse 13 von Glied 11 liegen.

Mit den schrägen Seitenflächen 37,38,39 bzw. 47,48,49 erhebt sich der Pyramidenstumpf 36 und der Pyramidenstumpf 46 aus der Federzunge 32 bzw. 34. Im unbelasteten Zustand ragen die Federzungen 32,34 gegenüber der Ebene 52 der Gelenkplatte 21 schräg nach oben. Die Federzungen 32,34 können eine mittels der Doppelpfeile 54,56 angedeutete Federbewegung ausführen.

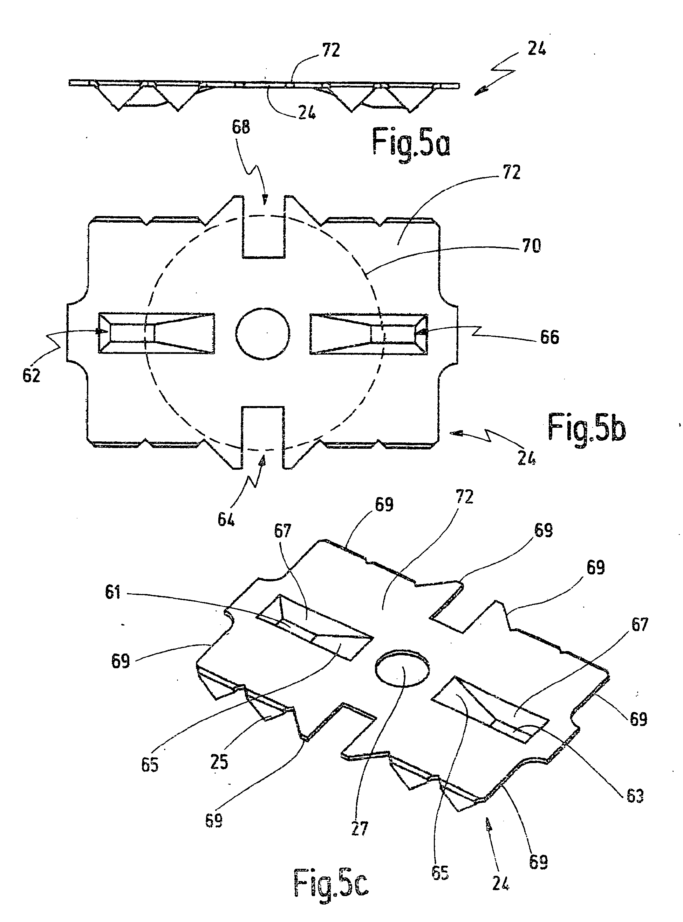

Fig. 5a zeigt entsprechend die zweite Gelenkplatte 24 in Seitenansicht, Fig. 5b in Draufsicht und Fig. 5c in perspektivischer Ansicht. Die zweite Gelenkplatte 24 hat einen ersten, zweiten, dritten und vierten Rastabschnitt 62,64,66 und 68. Die vier Rastabschnitte 62, 64, 66, 68 sind symmetrisch auf einer Kreisbahn 70 um die mittige Bohrung 27 in der Gelenkplatte 24 angeordnet. Mittels der Zacken 25 ist die Gelenkplatte 21 so im Holz des Gliedes 12 verankert, dass, wie die Fig. 3 zeigt, der erste und der dritte Rastabschnitt 62,66 zu beiden Seiten des Nietbolzens 30 auf der Längsachse 17 von Glied 12 liegen.

An dem Glied 12 des Gliedermaßstabs ist der erste und dritte Rastabschnitt 62,66 also mittig angeordnet. Der zweite und vierte Rastabschnitt 64,68 weist demgegenüber jeweils zu einer Längskante des Glieds 12: Der zweite und vierte Rastabschnitt 64, 68 ist im Bezug auf die Drehachse 16 der Gelenkverbindung 14 zu dem ersten und dem vierten Rastabschnitt 64,68 auf der Kreisbahn 70 um die Bohrung 27 der Gelenkplatte 24 in einem rechten Winkel angeordnet. Der erste und dritte Rastabschnitt 62, 66 ist komplementär zu den Erhebungen der Pyramidenstümpfe 36,46 der ersten Gelenkplatte 21 als pyramidenstumpfförmige Vertiefung geformt. Die jeweilige Vertiefung hat eine Bodenfläche 61,63, zu der sich schräge Seitenflächen 65,67 absenken. Die Rastabschnitte 64 und 68 sind als Ausnehmung Aussparung im Umfangsbereich 69 der Grundplatte gestaltet. Diese Ausnehmung kann beispielsweise durch Ausstanzen mit einem Stanzwerkzeug hergestellt werden.

Die Rastabschnitte 62,64,66,68 sind komplementäre Rastabschnitte zu den an den beiden Federzungen 32,34 ausgebildeten Rastabschnitten 36,46 der ersten Gelenkplatte 21: Die Deckfläche der Pyramidenstümpfe 36,46 wird unter Wirkung einer Federkraft der Federzungen 32,34 der ersten Gelenkplatte 21 gegen die Oberfläche der zweiten Gelenkplatte 24 gedrückt. Bei einem Verstellen der Gelenkverbindung 14 um die Drehachse 16 werden die Deckflächen 35,45 der Pyramidenstümpfe 36,46 entlang der Kreisbahn 70 über die Oberfläche 72 der zweiten Gelenkplatte 24 bewegt. Wenn dabei die an den Federzungen 32,34 der ersten Gelenkplatte 21 ausgebildeten pyramidenstumpfförmigen Rastabschnitte 36,46 an den Rastabschnitten 62 oder 68 bzw. 64 oder 66 der zweiten Gelenkplatte 24 liegen, geraten die Rastabschnitte 36,45 der ersten Gelenkplatte 21 mit den Rastabschnitten 62 und 66 oder mit den Rastabschnitten 64 und 68 der zweiten Gelenkplatte 24 in Eingriff. Indem die Rastabschnitte 32 und 46 der ersten Gelenkplatte 21 in die Rastabschnitte 62 und 66 der zweiten Gelenkplatte 24 eingreifen, wird eine Rastung der Gelenkanordnung 14 in einer ein- oder ausgefalteten Stellung der Glieder 11,12 des Gliedermaßstabs bewirkt. Wenn die Rastabschnitte 64 und 68 der zweiten Gelenkplatte 24 mit den Rastabschnitten 36 und 46 der ersten Gelenkplatte 21 in Eingriff geraten, rastet die Gelenkverbindung 14 in einer Stellung, bei der die Glieder 11,12 des Gliedermaßstabs um einen Winkel ϕ = ±90° zueinander verschwenkt sind.

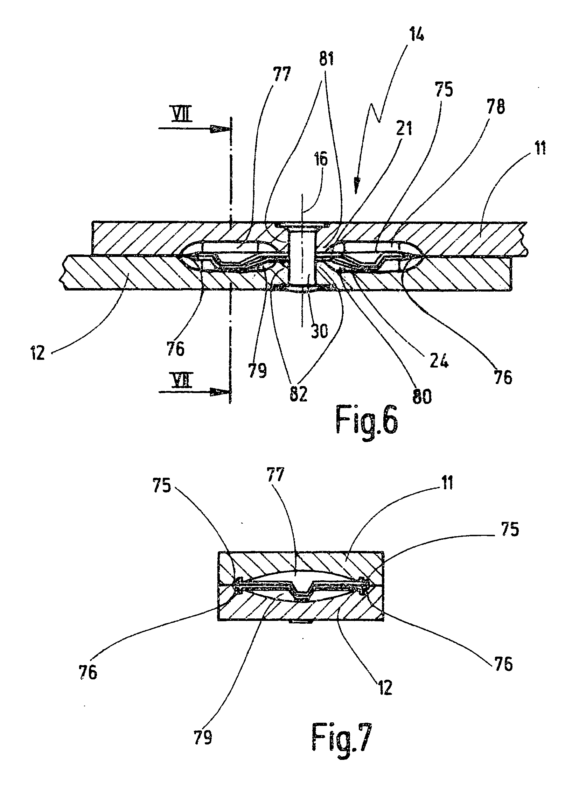

Die Fig. 6 zeigt einen Schnitt der Gelenkverbindung 14 in einer ausgefalteten Stellung der Glieder 11,12. Beide Enden des Nietbolzens 30 sind in einer Versenkung 71,72 aufgenommen. Der an der Federzunge 32 ausgebildete Pyramidenstumpf 36 an der Gelenkplatte 21 ist hier mit dem komplementären, als Vertiefung ausgebildeten Rastabschnitt 62 an der Gelenkplatte 24 ohne Spiel in Eingriff. Entsprechendes gilt für den Pyramidenstumpf 46 an der Federzunge 34 der Gelenkplatte 21 und dem hierzu komplementären Rastabschnitt 66 an der Gelenkplatte 24. Hierdurch wird eine präzise Rastung der Gelenkverbindung erreicht.

Die Gelenkplatte 21 ist in dem Glied 11 versenkt, die Gelenkplatte 24 in dem Glied 12. An dem Glied 11 ist hierzu eine Versenkungsvertiefung 75 für die Gelenkplatte 21 ausgebildet. Entsprechend gibt es eine Versenkungsvertiefung 76 an dem Glied 12 für die Gelenkplatte 24. In der Versenkungsvertiefung 75 gibt es zusätzlich eine erste und eine zweite wannenartige Ausnehmung 77,78. Die Versenkungsvertiefung 76 an dem Glied 12 hat zwei entsprechende wannenartig geformte, vertiefte Ausnehmungen 79,80.

Zwischen der ersten wannenartigen Ausnehmung 77 und der zweiten wannenartigen Ausnehmung 78 hat das Glied 11 im Bereich der Gelenkverbindung 14 einen Stegabschnitt 81. Entsprechend ist an dem Glied 12 zwischen der ersten wannenartigen Ausnehmung 79 und der zweiten wannenartigen Ausnehmung 80 ein Stegabschnitt 82 ausgebildet. Diese Stegabschnitte 81,82 bewirken eine gute Stabilität der Gelenkverbindung 14 im Bereich des Nietbolzens 30, trotz der Schwächung des Materials der Glieder 11,12 aufgrund der wannenartigen Ausnehmungen 77,78 und 79,80.

Fig. 7 zeigt einen Schnitt der Gelenkverbindung 14 entlang der Linie VII-VII aus Fig. 6. Die wannenartigen Ausnehmungen 77,78 nehmen die Federzungen 32,34 mit den daran geformten Rastabschnitten 36,46 auf, wenn das Glied 11 zu dem Glied 12 in der Gelenkverbindung 14 aus einem zusammengefalteten oder einer ausgefalteten Stellung geschwenkt wird. In den wannenartigen Ausnehmungen 79,80 sind die vertieft geformten Rastabschnitte 62 und 66 der zweiten Gelenkplatte 24 versenkt. Die Gelenkverbindung 14 ermöglicht so ein flächiges Aneinanderliegen von Glied 11,12.

Die schrägen Seitenflächen 38,39 des Rastabschnitts 36 der Gelenkplatte 21 und die komplementäre Form von Rastabschnitt 62 der zweiten Gelenkplatte 24 gewährleistet einerseits das weiche Ein- und Ausrasten der Gelenkverbindung 14 bei einem Schwenken der Glieder 11,12 und andererseits, dass die Gelenkverbindung ab einer bestimmten Öffnungsstellung der Glieder 11, 12 mittels Federkraft von selbst in die Raststellung bewegt wird.

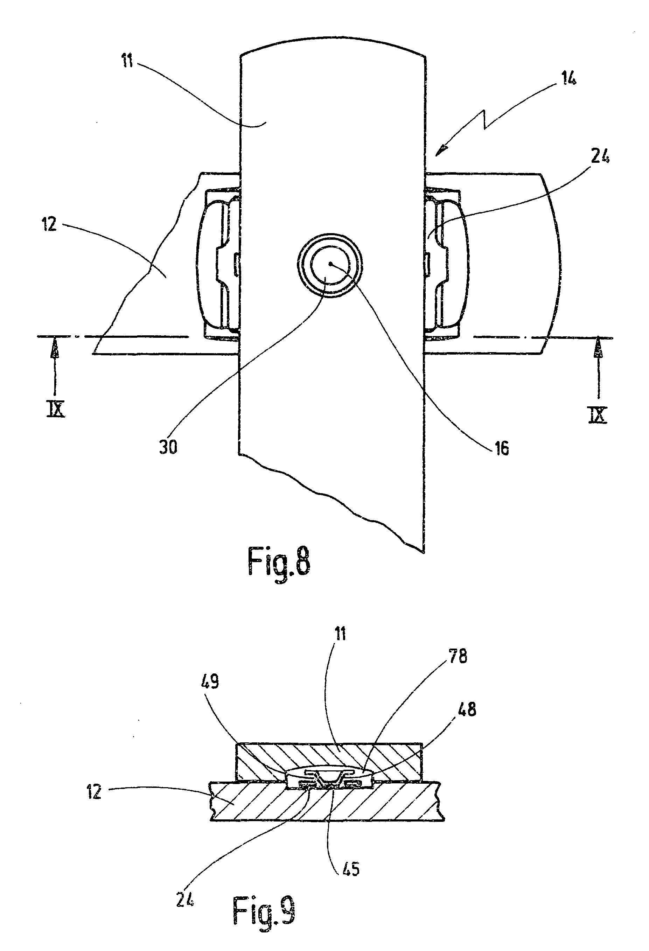

In Fig. 8 ist die Gelenkverbindung 14 in abgewinkelter 90°-Schwenkposition dargestellt. Hier wirken die Rastabschnitte 36,46 der Gelenkplatte mit den als Aussparungen im Randbereich geformten Rastabschnitten 64,68 der zweiten Gelenkplatte zusammen.

Die Fig. 9 zeigt einen Schnitt der Gelenkverbindung 14 aus Fig. 8 entlang der Linie IX-IX. Die Federzunge 34 der ersten Gelenkplatte 21 taucht hier mit dem Abschnitt der Deckfläche 45 des pyramidenförmigen Rastabschnitts 46 in die Ausnehmung 64 der zweiten Gelenkplatte 24. Die Federzunge 34 mit dem pyramidenförmigen Rastabschnitt 46 ist dabei in der wannenartigen Ausnehmung 78 in dem Glied 11 aufgenommen. Die schrägen Seitenflächen 48,49 des Rastabschnitts 46 ermöglichen auch hier einerseits ein sanftes Ein- und Ausrasten aus der Raststellung. Andererseits bewirken die schrägen Seitenflächen 48,49 des Rastabschnitts 46 auch hier wiederum, dass die Gelenkverbindung durch die Kraft der Federzungen 32, 34 in die Raststellung bewegt wird, wenn die Glieder 11, 12 in einem Winkel zueinander stehen, der nur wenig von einem rechten Winkel abweicht.

Da der Rastabschnitt 46 nur mit dem Abschnitt der Deckfläche 45 mit der Aussparung 64 an der zweiten Gelenkplatte 24 zusammenwirkt, ist die Rastung von Rastabschnitt 46 der zweiten Gelenkplatte 24 in dem Rastabschnitt 64 weniger stark als die Rastung im Rastabschnitt 62. Entsprechendes gilt für die Rastung von Rastabschnitt 36 mit der Aussparung 68, die als vierter komplementärer Rastabschnitt in der zweiten Gelenkplatte 24 wirkt. Damit wird erreicht, dass die Gelenkverbindung 14 bei ausgefalteter und zusammengefalteter Stellung der Glieder 11,12 vergleichsweise stark rastet, in den abgewinkelten 90°-Schwenkpositionen dagegen nur schwach.

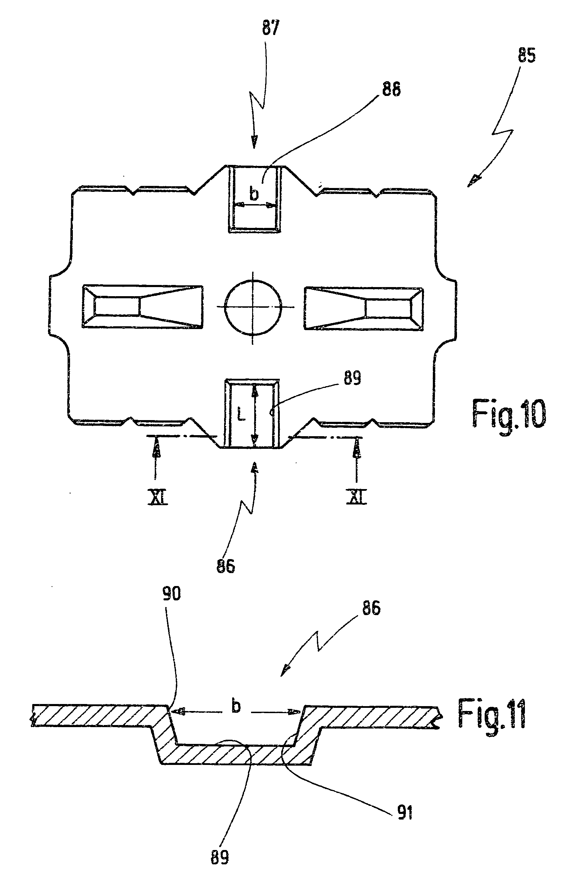

Die Fig. 10 zeigt eine alternative Ausführung 85 für die zweite Gelenkplatte der Gelenkverbindung 14. Hier sind zweite und vierte komplementäre Rastabschnitte 86,87 vorgesehen, die als Wanne bzw. Rinne 88,89 mit eckigen Kanten gestaltet sind. Im Übrigen entspricht die alternative Ausführung 85 für die zweite Gelenkplatte 24, die in Fig. 5a, b und c gezeigt ist

Fig. 11 zeigt einen vergrößerten Schnitt der Gelenkplatte 85 entlang der Linie XI-XI aus Fig. 10. Die Wanne 89 hat eine ebene Bodenfläche und schräge Seitenflächen 90,91. Die Form der Wanne bzw. Rinne 89 entspricht der Kontur des Abschnitts der Rastabschnitte 36,46 an Federzungen 32,34 der ersten Gelenkplatte 21 im Bereich der Deckfläche 35,45 der pyramidenstumpfförmigen Erhebung.

Nachfolgend sind weitere mögliche Geometrien für zweite und vierte komplementäre Rastabschnitte bei einer alternativen Ausführungsform für die zweite Gelenkplatte der Gelenkverbindung anhand von Schnitten erläutert, die dem in Fig. 11 abgebildeten Schnitt entsprechen.

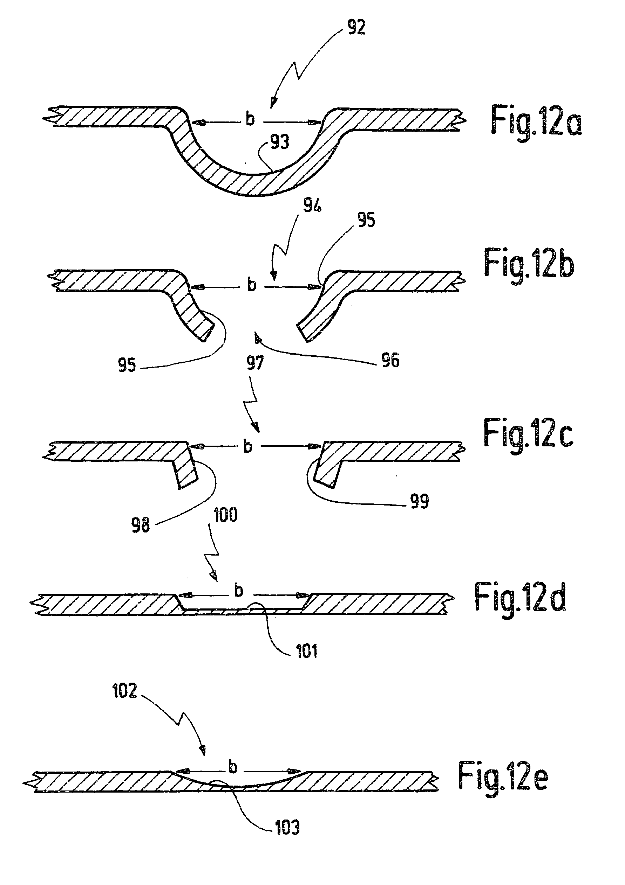

Die Fig. 12a zeigt einen Rastabschnitt 92 in der Form einer runden Wanne bzw. Rinne mit gekrümmter Bodenfläche 93. In Fig. 12b ist ein Rastabschnitt 94 in der Form einer runden Wanne gezeigt, in deren Bodenfläche 95 eine Durchbrechung 96 ausgebildet ist. Der in Fig. 12c gezeigte Rastabschnitt 97 hat schräge Seitenflächen 98, die zu einer Durchbrechung 99 geöffnet sind.

Die Breite b und die Länge I der Rastabschnitte 86,87,92,94,97 ist jeweils an die Bemaßung der pyramidenförmigen Rastabschnitte 36,46 an der ersten Gelenkplatte angepasst. Die geometrische Form der Rastabschnitte einschließlich deren Tiefe beeinflusst die Stärke der Rastung der Gelenkverbindung bei eine entsprechend abgewinkelten Stellung der Glieder des Gliedermaßstabs.

Die Rastabschnitte der zweiten Gelenkplatte 24 aus Fig. 5a bis c und bei den anhand von Fig. 10, 11 sowie Fig. 12a, b und c erläuterten alternativen Ausführungsformen hierfür können etwa durch Stanzen und Tiefziehen einer Platte aus Federstahl hergestellt werden.

Die Fig. 12d zeigt als Rastabschnitt 100 bei einer alternativen Ausführungsform für die zweite Gelenkplatte eine eckige Einschlifffase bzw. Einkerbung 101. In der Fig. 12e ist ein als Einkerbung in Form einer runden Einschlifffase 103 gestalteter Rastabschnitt 102 gezeigt. Die Tiefe der jeweiligen Einschlifffase kann beispielsweise 0,2 mm betragen. Auch hier entsprechen die Breite b und Länge I der der Einschlifffasen 101,103 der Größe der pyramidenförmigen Rastabschnitte 36,34 an der zweiten Gelenkplatte.

Zusammenfassend ist folgendes festzuhalten: Die Erfindung bezieht sich auf einen Gliedermaßstab mit langgestreckten flachen Gliedern, die paarweise gelenkig verbunden sind,
bei dem eine Gelenkverbindung mit einer Drehachse eine erste Gelenkplatte aufweist, die an einem ersten Glied festgelegt ist, und eine zweite Gelenkplatte umfasst, welche an einem zweiten Glied befestigt ist,
wobei an der ersten Gelenkplatte eine *erste* Federzunge mit einem Rastabschnitt *und eine zweite Federzunge mit einem Rastabschnitt* ausgebildet ist, *die jeweils mit zwei* ersten komplementären *Rastabschnitten und mit zwei* zweiten komplementären *Rastabschnitten* an der zweiten Gelenkplatte zusammenwirken, um die Gelenkverbindung in einer ersten Einstellung und in einer von der ersten Einstellung verschiedenen zweiten Einstellung mittels Federkraft zu rasten, wenn das erste Glied relativ zu dem zweiten Glied um die Drehachse geschwenkt wird,
wobei bei einem Schwenken des ersten Glieds relativ zu dem zweiten Glied der an der ersten und der zweiten Federzunge der ersten Gelenkplatte ausgebildete Rastabschnitt mit dem zweiten komplementären Rastabschnitt an der zweiten Gelenkplatte die Gelenkverbindung zwischen einer eingefalteten und einer ausgefalteten Stellung der Glieder in einer abgewinkelten Stellung rastet;
wobei
*das erste Glied eine erste wannenartige Ausnehmung auf weist, in welche die erste Federzunge mit ihrem Rastabschnitt bei einem Verstellen der Gelenkverbindung eintaucht, und eine zweite wannenartige Ausnehmung aufweist, welche die zweite Federzunge mit ihrem Rastabschnitt bei einem Verstellen der Gelenkverbindung eintaucht, wobei*
*zwischen der ersten wannenartigen Ausnehmung und der zweiten wannenartigen Ausnehmung ein die Gelenkverbindung stabilisierender Stegabschnitt mit einer Durchgangsbohrung für einen Nietbolzen ausgebildet ist, der das erste Glied und das zweite Glied an den einander zugewandten Breitseitenflächen zusammendrückt; und*
*das zweite Glied eine erste und eine zweite wannenartige Ausnehmung aufweist, zwischen denen ein die Gelenkverbindung stabilisierander, sich unter der zweiten Gelenkplatte zwischen den beiden zweiten komplementären Rastabschnitten erstreckender Stegabschnitt mit einer Durchgangsbohrung für den Nietbolzen ausgebildet ist, wobei in der ersten und zweiten wannenartigen Ausnehmung jeweils einer der beiden ersten komplementären Rastabschnitte der zweiten Gelenkplatte (24) aufgenommen ist.*

## Patentansprüche

1. Gliedermaßstab mit langgestreckten flachen Gliedern (11, 12), die paarweise gelenkig verbunden sind,
bei dem eine Gelenkverbindung (14) mit einer Drehachse (16) eine erste Gelenkplatte (21) aufweist, die an einem ersten Glied (11) festgelegt ist, und eine zweite Gelenkplatte (24) umfasst, welche an einem zweiten Glied (12) befestigt ist,
wobei an der ersten Gelenkplatte (21) eine *erste* Federzunge (32) mit einem Rastabschnitt (36) und eine zweite Federzunge (34) mit einem Rastabschnitt (46) ausgebildet ist, die jeweils mit zwei ersten komplementären Rastabschnitten (62, 66) und mit zwei zweiten komplementären Rastabschnitten (64, 68) an der zweiten Gelenkplatte (24) zusammenwirken, um die Gelenkverbindung (14) in einer ersten Einstellung und in einer von der ersten Einstellung verschiedenen zweiten Einstellung mittels Federkraft zu rasten, wenn das erste Glied (11) relativ zu dem zweiten Glied (12) um die Drehachse (16) geschwenkt wird,
wobei bei einem Schwenken des ersten Glieds (11) relativ zu dem zweiten Glied (12) der an der ersten und der zweiten Federzunge (32, 34) der ersten Gelenkplatte (21) ausgebildete Rastabschnitt (36,46) mit dem zweiten komplementären Rastabschnitt (64, 68) an der zweiten Gelenkplatte (24) die Gelenkverbindung (14) zwischen einer eingefalteten und einer ausgefalteten Stellung der Glieder (11,12) in einer abgewinkelten Stellung rastet;
**dadurch gekennzeichnet, dass**
das erste Glied (11) eine erste wannenartige Ausnehmung (77) aufweist, in welche die erste Federzunge (32) mit ihrem Rastabschnitt (36) bei einem Verstellen der Gelenkverbindung (14) eintaucht, und eine zweite wannenartige Ausnehmung (78) aufweist, welche die zweite Federzunge (34) mit ihrem Rastabschnitt (46) bei einem Verstellen der Gelenkverbindung (14) eintaucht, wobei
zwischen der ersten wannenartigen Ausnehmung (77) und der zweiten wannenartigen Ausnehmung (78) ein die Gelenkverbindung (14) stabilisierender Stegabschnitt (81) mit einer Durchgangsbohrung (28) für einen Nietbolzen (30) ausgebildet ist, der das erste Glied (11) und das zweite Glied (12) an den einander zugewandten Breitseitenflächen (5,6) zusammendrückt; und
das zweite Glied (12) eine erste und eine zweite wannenartige Ausnehmung (79, 80) aufweist, zwischen denen ein die Gelenkverbindung stabilisierender, sich unter der zweiten Gelenkplatte (24) zwischen den beiden zweiten komplementären Rastabschnitten (64, 68) erstreckender Stegabschnitt (82) mit einer Durchgangsbohrung (29) für den Nietbolzen (30) ausgebildet ist, wobei in der ersten und zweiten wannenartigen Ausnehmung (79, 80) jeweils einer der beiden ersten komplementären Rastabschnitte (62, 66) der zweiten Gelenkplatte (24) aufgenommen ist.

2. Gliedermaßstab nach Anspruch 1, **dadurch gekennzeichnet, dass** der Rastabschnitt (36, 46) der ersten Federzunge (32) und/oder der zweiten Federzunge (34) eine aus der Federzunge (32, 34) ragende Erhebung (36, 46) ist.

3. Gliedermaßstab nach Anspruch 2, **dadurch gekennzeichnet, dass** die aus der Federzunge (32, 34) ragende Erhebung als Pyramidenstumpf (36, 46) ausgebildet ist.

4. Gliedermaßstab nach Anspruch 3, **dadurch gekennzeichnet, dass** der Pyramidenstumpf (36, 46) eine zur Drehachse (16) der Gelenkverbindung (14) weisende, langgestreckte schräge Flanke (40,50) hat.

5. Gliedermaßstab nach einem der Ansprüche 1 bis 4, dadurch gekenn-zeichnet, dass wenigstens einer der ersten komplementären Rastabschnitte (62, 66) eine Vertiefung in der zweiten Gelenkplatte (21) ist

6. Gliedermaßstab nach Anspruch 5, **dadurch gekennzeichnet, dass** die Vertiefung als eine pyramidenstumpfförmige Vertiefung (62, 66) in der zweiten Gelenkplatte (21) geformt ist.

7. Gliedermaßstab nach einem der Ansprüche 1 bis 6, **dadurch gekennzeichnet, dass** das erste Glied (11) eine Versenkungsausnehmung (75) für die erste Gelenkplatte (21) hat und/oder das zweite Glied (12) eine Versenkungsausnehmung (76) für die zweite Gelenkplatte (24) hat.

8. Gliedermaßstab nach einem der Ansprüche 1 bis 7, **dadurch gekennzeichnet, dass** wenigstens einer der beiden zweiten komplementären Rastabschnitte eine seitliche Aussparung (64, 68) in der zweiten Gelenkplatte (24) ist.

9. Gliedermaßstab nach Anspruch 8, **dadurch gekennzeichnet, dass** die seitliche Aussparung (64,68) rechteckförmig ist.

10. Gliedermaßstab nach einem der Ansprüche 1 bis 9, **dadurch gekennzeichnet, dass** wenigstens einer der beiden zweiten komplementäre Rastabschnitte eine Vertiefung (88,89) in der zweiten Gelenkplatte (85) ist.

11. Gliedermaßstab nach Anspruch 10, **dadurch gekennzeichnet, dass** die Vertiefung (92) eine gekrümmte Bodenfläche (93) hat.

12. Gliedermaßstab nach Anspruch 11, **dadurch gekennzeichnet, dass** die Vertiefung (86,87) eine ebene Bodenfläche (88,89) hat.

13. Gliedermaßstab nach Anspruch 11, **dadurch gekennzeichnet, dass** in der Vertiefung (96,99) eine Durchbrechung ausgebildet ist.

14. Gliedermaßstab nach einem der Ansprüche 1 bis 7, **dadurch gekennzeichnet, dass** wenigstens einer der beiden zweiten komplementären Rastabschnitte eine in der zweiten Gelenkplatte ausgebildete runde (103) oder eine eckige (101) Einschlifffase aufweist.

## Claims

1. Folding rule having elongate flat limbs (11, 12) which are connected in a hinged manner in pairs,
in which a hinge connection (14) with an axis of rotation (16) has a first hinge plate (21) which is fixed to a first limb (11), and comprises a second hinge plate (24) which is fastened to a second limb (12),
wherein a first spring tongue (32) with a latching portion (36) and a second spring tongue (34) with a latching portion (46) are formed on the first hinge plate (21) and each interact with two first complementary latching portions (62, 66) and with two second complementary latching portions (64, 68) on the second hinge plate (24) in order to latch, by means of spring force, the hinge connection (14) in a first setting and in a second setting different from the first setting when the first limb (11) is pivoted relative to the second limb (12) about the axis of rotation (16),
wherein, during a pivoting of the first limb (11) relative to the second limb (12), the latching portion (36, 46) formed on the first and the second spring tongue (32, 34) of the first hinge plate (21), together with the second complementary latching portion (64, 68) on the second hinge plate (24), latches the hinge connection (14) between a folded-in and a folded-out position of the limbs (11, 12) in an angled position;
**characterized in that**
the first limb (11) has a first trough-like recess (77) into which the first spring tongue (32) engages with its latching portion (36) during an adjustment of the hinge connection (14), and has a second trough-like recess (78) into which the second spring tongue (34) engages with its latching portion (46) during an adjustment of the hinge connection (14), wherein
a web portion (81) which stabilizes the hinge connection (14) is formed between the first trough-like recess (77) and the second trough-like recess (78) and has a through-hole (28) for a rivet bolt (30) which presses together the first limb (11) and the second limb (12) at the mutually facing broad side faces (5, 6); and
the second limb (12) has a first and a second trough-like recess (79, 80) between which there is formed a web portion (82) which stabilizes the hinge connection, extends below the second hinge plate (24) between the two second complementary latching portions (64, 68) and has a through-hole (29) for the rivet bolt (30), wherein one of the two first complementary latching portions (62, 66) of the second hinge plate (24) is in each case accommodated in the first and second troughlike recess (79, 80).

2. Folding rule according to Claim 1, **characterized in that** the latching portion (36, 46) of the first spring tongue (32) and/or of the second spring tongue (34) is an elevation (36, 46) projecting from the spring tongue (32, 34).

3. Folding rule according to Claim 2, **characterized in that** the elevation projecting from the spring tongue (32, 34) is designed as a truncated pyramid (36, 46).

4. Folding rule according to Claim 3, **characterized in that** the truncated pyramid (36, 46) has an elongate oblique flank (40, 50) directed towards the axis of rotation (16) of the hinge connection (14).

5. Folding rule according to one of Claims 1 to 4, **characterized in that** at least one of the first complementary latching portions (62, 66) is a depression in the second hinge plate (21).

6. Folding rule according to Claim 5, **characterized in that** the depression is formed as a truncated pyramid-shape depression (62, 66) in the second hinge plate (21).

7. Folding rule according to one of Claims 1 to 6, **characterized in that** the first limb (11) has a sunken recess (75) for the first hinge plate (21) and/or the second limb (12) has a sunken recess (76) for the second hinge plate (24).

8. Folding rule according to one of Claims 1 to 7, **characterized in that** at least one of the two second complementary latching portions is a lateral cutout (64, 68) in the second hinge plate (24).

9. Folding rule according to Claim 8, **characterized in that** the lateral cutout (64, 68) is rectangular.

10. Folding rule according to one of Claims 1 to 9, **characterized in that** at least one of the two second complementary latching portions is a depression (88, 89) in the second hinge plate (85).

11. Folding rule according to Claim 10, **characterized in that** the depression (92) has a curved bottom face (93).

12. Folding rule according to Claim 11, **characterized in that** the depression (86, 87) has a planar bottom face (88, 89).

13. Folding rule according to Claim 11, **characterized in that** a perforation is formed in the depression (96, 99).

14. Folding rule according to one of Claims 1 to 7, **characterized in that** at least one of the two second complementary latching portions has a round (103) or an angular (101) ground-in bevel formed in the second hinge plate.

## Revendications

1. Mètre pliant, avec des éléments (11, 12) plats allongés, qui sont reliés par paires de manière articulée,
sur lequel une liaison articulée (14) avec un axe de rotation (16) comporte une première plaque articulée (21) qui est immobilisée sur un premier élément (11) et une deuxième plaque articulée (24) qui est fixée sur un deuxième élément (12),
sur la première plaque articulée (21) étant conçues une première languette à ressort (32) avec une section d'enclenchement (36) et une deuxième languette à ressort (34) avec une section d'enclenchement (46), coopérant chacune avec deux premières sections d'enclenchement (62, 66) complémentaires et avec deux deuxièmes sections d'enclenchement (64, 68) complémentaires sur la deuxième plaque articulée (24) pour enclencher par la force du ressort la liaison articulée (14) selon un premier réglage et selon un deuxième réglage différent du premier réglage, lorsqu'on fait pivoter le premier élément (11) par rapport au deuxième élément (12) autour de l'axe de rotation (16),
lors d'un pivotement du premier élément (11) par rapport au deuxième élément (12), la section d'enclenchement (36, 46) conçue sur la première et sur la deuxième languette à ressort (32, 34) de la première plaque articulée (21) enclenchant avec la deuxième section d'enclenchement (64, 68) complémentaire sur la deuxième plaque articulée (24) la liaison articulée (14) entre une position repliée et dépliée des éléments (11, 12) dans une position coudée ;
**caractérisé en ce que** le premier élément (11) comporte un premier évidement (77) en forme de cuve dans lequel la première languette à ressort (32) plonge avec sa section d'enclenchement (36), lors d'un déplacement de la liaison articulée (14) et un deuxième évidement (78) en forme de cuve dans lequel la deuxième languette à ressort (34) plonge avec sa section d'enclenchement (46), lors d'un déplacement de la liaison articulée (14),
entre le premier évidement (77) en forme de cuve et le deuxième évidement (78) en forme de cuve étant conçue une section en barrette (81) stabilisant la liaison articulée (14), avec un perçage traversant (28) pour un boulon rivé (30), qui presse le premier élément (11) et le deuxième élément (12) sur les surfaces des côtés larges (5, 6) qui se font face ; et
le deuxième élément (12) comportant un premier et un deuxième évidement (79, 80) en forme de cuve, entre lesquels est conçue une section en barrette (82) stabilisant la liaison articulée, s'étendant entre les deux deuxièmes sections d'enclenchement (64, 68) complémentaires, sous la deuxième plaque articulée (24), avec un perçage traversant (29) pour le boulon rivé (30), dans le premier et dans le deuxième évidement (79, 80) en forme de cuve étant logée à chaque fois l'une des deux premières sections d'enclenchement (62, 66) complémentaires de la deuxième plaque articulée (24).

2. Mètre pliant selon la revendication 1, **caractérisé en ce que** la section d'enclenchement (36, 46) de la première languette à ressort (32) et/ou de la deuxième languette à ressort (34) est une bosse (36, 46) saillant hors de la languette à ressort (32, 34).

3. Mètre pliant selon la revendication 2, **caractérisé en ce que** la bosse saillant hors de la languette à ressort (32, 34) est conçue en tant que pyramide tronquée (36, 46).

4. Mètre pliant selon la revendication 3, **caractérisé en ce que** la pyramide tronquée (36, 46) dispose d'un flanc incliné (40, 50) allongé dirigé vers l'axe de rotation (16) de la liaison articulée (14).

5. Mètre pliant selon l'une quelconque des revendications 1 à 4, **caractérisé en ce qu'**au moins l'une des premières sections d'enclenchement (62, 66) complémentaires est un creux dans la deuxième plaque articulée (21).

6. Mètre pliant selon la revendication 5, **caractérisé en ce que** le creux est formé en tant qu'un creux (62, 66) en pyramide tronquée dans la deuxième plaque articulée (21).

7. Mètre pliant selon l'une quelconque des revendications 1 à 6, **caractérisé en ce que** le premier élément (11) dispose d'un évidement d'immersion (75) pour la première plaque articulée (21) et/ou **en ce que** le deuxième élément (12) dispose d'un évidement d'immersion (76) pour la deuxième plaque articulée (24).

8. Mètre pliant selon l'une quelconque des revendications 1 à 7, **caractérisé en ce qu'**au moins l'une des deux deuxièmes sections d'enclenchement complémentaires est une encoche (64, 68) latérale dans la deuxième plaque articulée (24).

9. Mètre pliant selon la revendication 8, **caractérisé en ce que** l'encoche (64, 68) latérale est de forme rectangulaire.

10. Mètre pliant selon l'une quelconque des revendications 1 à 9, **caractérisé en ce qu'**au moins l'une des deux deuxièmes sections d'enclenchement complémentaires est un creux (88, 89) dans la deuxième plaque articulée (85).

11. Mètre pliant selon la revendication 10, **caractérisé en ce que** le creux (92) a un fond (93) à surface courbe.

12. Mètre pliant selon la revendication 11, **caractérisé en ce que** le creux (86, 87) a un fond (88, 89) à surface plane.

13. Mètre pliant selon la revendication 11, **caractérisé en ce que** dans le creux (96, 99) est conçu un passage.

14. Mètre pliant selon l'une quelconque des revendications 1 à 7, **caractérisé en ce qu'**au moins l'une des deux deuxièmes sections d'enclenchement complémentaires comporte un chanfrein poli rond (103) ou anguleux (101) dans la deuxième plaque articulée.
